# FASCICULE DE BREVET EUROPEEN

(11) **EP 3 132 173 B1**
(45) Date de publication et mention de la délivrance du brevet: **01.07.2020**
(21) Numéro de dépôt: 15715288.5
(22) Date de dépôt: 14.04.2015
(51) Int. Cl.: F16L 25/01, F16L 37/091

(54) **DISPOSITIF DE RACCORDEMENT ASSURANT UNE CONTINUITÉ ÉLECTRIQUE ENTRE TUBES**
KUPPLUNGSVORRICHTUNG ZUR BEREITSTELLUNG VON ELEKTRISCHER KONTINUITÄT ZWISCHEN ROHREN
COUPLING DEVICE PROVIDING ELECTRICAL CONTINUITY BETWEEN TUBES

(30) Priorité: 14.04.2014 FR 1453331
(43) Date de publication de la demande: 22.02.2017
(73) Titulaire: Parker Hannifin Manufacturing France SAS, 74112 Annemasse (FR)
(72) Inventeur: LE QUERE, Philippe, F-35830 Betton (FR)
(74) Mandataire: Lavialle, Bruno François Stéphane
(86) Numéro de dépôt international: PCT/EP2015/058064
(87) Numéro de publication internationale: WO 2015/158708

(56) Documents cités:
- EP-A1- 1 936 251
- WO-A1-2015/089592
- DE-A1- 4 124 968
- GB-A- 2 204 189
- US-A- 4 346 428
- US-A- 4 659 870
- US-A1- 2009 096 209
- US-A1- 2010 025 079

## Description

La présente invention concerne les circuits de transport de fluide et plus précisément un dispositif de raccordement de tubes l'un à l'autre.

Les documents US 4,346,428 et US 2009/0096209 A1 divulguent des dispositifs de raccordement de tubes qui établissent une conduction électrique entre les tubes à raccorder.

Un dispositif de raccordement comprend généralement un corps délimitant un canal ayant deux tronçons d'extrémité chacun pourvu de moyens d'y assujettir de manière étanche une extrémité d'un des tubes. Chaque tronçon d'extrémité est ainsi pourvu d'un chambrage annulaire qui reçoit un élément d'étanchéité pour enserrer l'extrémité de tube et qui comporte un épaulement de butée pour s'opposer à un enfoncement de l'élément d'étanchéité dans le corps lors de l'introduction de l'extrémité de tube.

Le corps est généralement réalisé en un matériau électriquement isolant. Dans certaines applications, les tubes sont eux en métal et il est nécessaire d'assurer une continuité électrique entre les tubes. A cette fin, il est connu de fixer sur les tubes les extrémités d'une tresse électriquement conductrice s'étendant par-dessus le dispositif de raccordement. Ceci oblige néanmoins à une opération supplémentaire après la connexion des tubes au dispositif de raccordement. Au surplus, cette opération risque d'être omise par l'opérateur et obère l'intérêt d'équiper le dispositif de raccordement de moyens de connexion instantanée.

Un but de l'invention est de remédier au moins en partie au problème qui vient d'être énoncé.

A cet effet, on prévoit, selon l'invention, un dispositif de raccordement de tubes électriquement conducteurs, comportant un corps délimitant un canal ayant deux tronçons d'extrémité agencés pour recevoir chacun une extrémité d'un des tubes. Chaque tronçon d'extrémité est pourvu d'un chambrage annulaire pourvu d'un flanc orienté vers une entrée dudit tronçon d'extrémité. Le dispositif de raccordement comprend au moins un élément de conduction électrique élastiquement déformable ayant des extrémités en appui contre lesdits flancs des chambrages annulaires et au moins une partie intermédiaire s'étendant dans le canal pour assurer une continuité électrique entre les deux extrémités de tube.

L'entrée du tronçon d'extrémité est celle par laquelle l'extrémité de tube est destinée à être introduite dans ledit tronçon d'extrémité. L'élément de conduction est simplement retenu dans le corps par clipage (les extrémités étant en appui élastique contre deux flancs, d'orientation opposées, des chambrages annulaires), ce qui en facilite le montage.

Selon l'invention, la partie intermédiaire est bombée et fait saillie dans le canal pour prendre appui sur la surface extérieure des extrémités de chaque tube.

Ainsi, l'élément de conduction électrique assure la continuité électrique entre les tubes par contact avec la surface extérieure des tubes, ce contact pouvant être maintenu même en cas de recul des tubes par exemple sous l'effet d'une mise sous pression du circuit incorporant le dispositif de raccordement.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en coupe longitudinale d'un dispositif de raccordement selon un premier mode de réalisation de l'invention,
- la figure 2 est une vue agrandie de la zone II de la figure 1, montrant une des extrémités de l'élément de conduction de ce dispositif,
- la figure 3 est une vue partielle de côté de cette extrémité,
- les figures 4 et 5 sont des vues analogues aux figures 2 et 3 d'une première variante de réalisation des extrémités de l'élément de conduction,
- les figures 6 et 7 sont des vues analogues aux figures 2 et 3 d'une deuxième variante de réalisation des extrémités de l'élément de conduction,
- les figures 8 et 9 sont des vues analogues aux figures 2 et 3 d'une troisième variante de réalisation des extrémités de l'élément de conduction,
- les figures 10 et 11 sont des vues analogues aux figures 2 et 3 d'une quatrième variante de réalisation des extrémités de l'élément de conduction,
- la figure 12 est une vue analogue à la figure 1 d'un dispositif de raccordement selon une première variante du dispositif de raccordement selon le premier mode de réalisation,
- la figure 13 est une vue analogue à la figure 1 d'un dispositif de raccordement selon une deuxième variante du dispositif de raccordement selon le premier mode de réalisation,
- la figure 14 est une vue analogue à la figure 1 d'un dispositif de raccordement selon un deuxième mode de réalisation.

Le dispositif de raccordement conforme à l'invention est destiné à permettre le raccordement fluidique de deux tubes l'un à l'autre. Les tubes ont un diamètre externe D et sont en un matériau électriquement conducteur, comme un métal tel que l'acier inoxydable. Le métal est à nu au moins sur la surface externe de l'extrémité de chaque tube qui est destinée à être engagée dans le dispositif de raccordement.

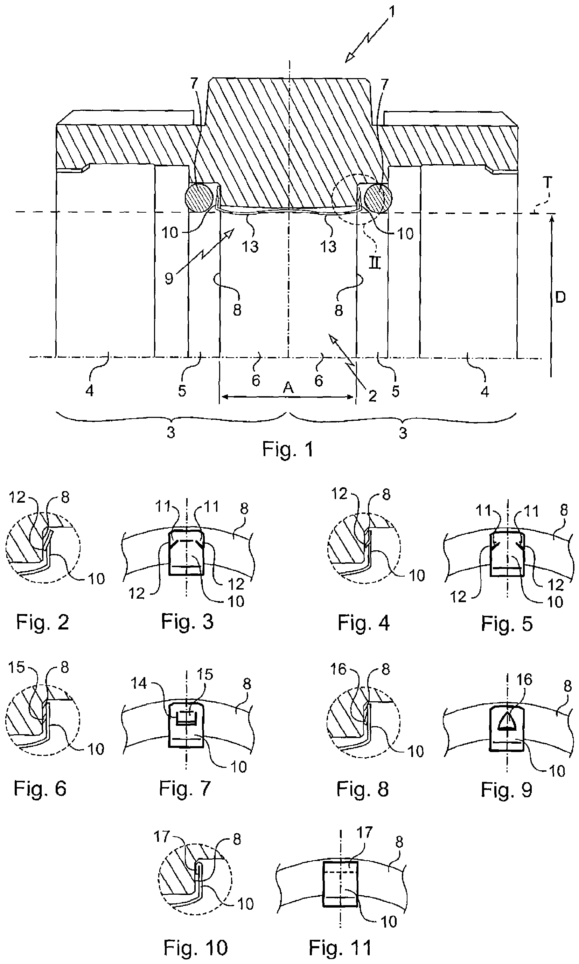

En référence aux figures 1 à 3, le dispositif de raccordement selon le premier mode de réalisation de l'invention comporte un corps, généralement désigné en 1, délimitant un canal généralement désigné en 2 ayant deux tronçons d'extrémité 3 agencés de manière identique pour recevoir chacun une extrémité d'un des tubes T (représentés en pointillés sur la figure 1).

Chaque tronçon d'extrémité 3 est pourvu d'un chambrage d'entrée 4, d'un chambrage intermédiaire 5 et d'un logement terminal 6. Tous les chambrages et les logements sont de forme annulaire. Le chambrage d'entrée 4 est agencé pour recevoir une douille non représentée d'accrochage d'un relief externe du tube. Le chambrage intermédiaire 5 reçoit un élément d'étanchéité 7 agencé pour enserrer l'extrémité de tube et est pourvu d'un flanc orienté vers l'entrée dudit tronçon d'extrémité 3 pour former une surface de butée 8 pour s'opposer à un enfoncement de l'élément d'étanchéité 7 dans le corps 1. Le logement terminal 6 a un diamètre légèrement supérieur au diamètre D et est ainsi agencé pour recevoir la portion terminale de l'extrémité de tube. Les logements terminaux 6 sont en communication l'un avec l'autre et forment le tronçon central du canal 2. Les surfaces de butée 8 sont espacées l'une de l'autre d'une distance A.

Les extrémités de tube sont retenues dans le dispositif de raccordement au moyen de manchons qui agrippent les douilles d'accrochage et sont vissés sur les extrémités du corps 1. Ces moyens de retenue des tubes sont connus en eux-mêmes, par exemple du document EP-A-1522356, et ne seront donc pas plus détaillés ici.

Le dispositif de raccordement comprend au moins un élément de conduction électrique, généralement désigné en 9, qui s'étend dans le tronçon central du canal 2. L'élément de conduction électrique 9 est ici un feuillard métallique élastiquement déformable, ici en acier inoxydable, qui est conformé en agrafe.

L'élément de conduction électrique 9 a des extrémités 10 en appui contre les surfaces de butée 8 de telle manière que, du fait de son élasticité, l'élément de conduction électrique 9 pince les deux surfaces de butée 8. Les extrémités 10 se font face et sont écartées l'une de l'autre d'une distance inférieure à la distance A. Chaque extrémité 10 de l'élément de conduction électrique 9 comprend deux découpes obliques 11 qui ont des premières extrémités débouchant sur un des bords longitudinaux opposés de l'extrémité 10 et des deuxièmes extrémités reliées par une ligne de pliage le long de laquelle l'extrémité 10 est pliée pour former deux dents pointues 12 en saillie de l'élément de conduction électrique 9. Les extrémités 10 présentent ainsi des dents 12 qui sont formées par découpe et déformation plastique et qui sont agencées pour mordre la surface de butée 8 à la manière de harpons s'opposant au retrait de l'élément de conduction électrique 9.

L'élément de conduction électrique 9 comprend deux parties intermédiaires bombées 13 s'étendant dans le logement terminal 6 et en saillie radiale vers l'axe centrale du canal 2 pour prendre chacune appui contre la surface extérieure de l'extrémité de conduite reçue dans ledit logement terminal 6. Les parties intermédiaires bombées 13 définissent ainsi une section de passage ayant un diamètre inférieur au diamètre D.

Lorsque les extrémités de tube T sont engagées dans le dispositif de raccordement jusqu'aux logements terminaux 6, les parties intermédiaires bombées 13 viennent frotter contre la surface externe des extrémités de tube et sont élastiquement appliquées contre ladite surface externe. L'élément de conduction 9 assure ainsi une continuité électrique entre les deux extrémités de tube.

Dans la première variante de l'élément de conduction 9 représentée sur les figures 4 et 5, chaque extrémité 10 de l'élément de conduction électrique 9 comprend deux découpes obliques 11 qui ont chacune une première extrémité débouchant sur un des bords longitudinaux de l'extrémité 10 et une deuxième extrémité reliée audit bord par une ligne de pliage le long de laquelle la portion découpée est pliée pour former une dent pointue 12 en saillie de l'élément de conduction électrique 9. L'extrémité 10 comprend ainsi deux dents 12 agencées pour harponner la surface de butée 8.

Dans la deuxième variante des figures 6 et 7, chaque extrémité 10 de l'élément de conduction électrique 9 comprend une découpe centrale 14 délimitant trois côtés d'une dent 15, de forme rectangulaire, pliée pour s'étendre en saillie de l'extrémité 10 de l'élément de conduction électrique 9. La dent 15 est agencée pour mordre la surface de butée 8 à la manière d'un harpon.

Dans la troisième variante des figures 8 et 9, chaque extrémité 10 de l'élément de conduction électrique 9 est pourvue d'un crevé formant une dent 16, de forme triangulaire en saillie de l'extrémité 10 de l'élément de conduction électrique 9. La dent 16 est agencée pour mordre la surface de butée 8.

Dans la quatrième variante des figures 10 et 11, chaque extrémité 10 de l'élément de conduction électrique 9 a une portion terminale qui est rabattue sur elle-même par déformation plastique et qui forme une dent 17, de forme rectangulaire en saillie de l'extrémité 10 de l'élément de conduction électrique 9. Les dents 17 se font face et ont une arête susceptible de pénétrer la surface de butée 8.

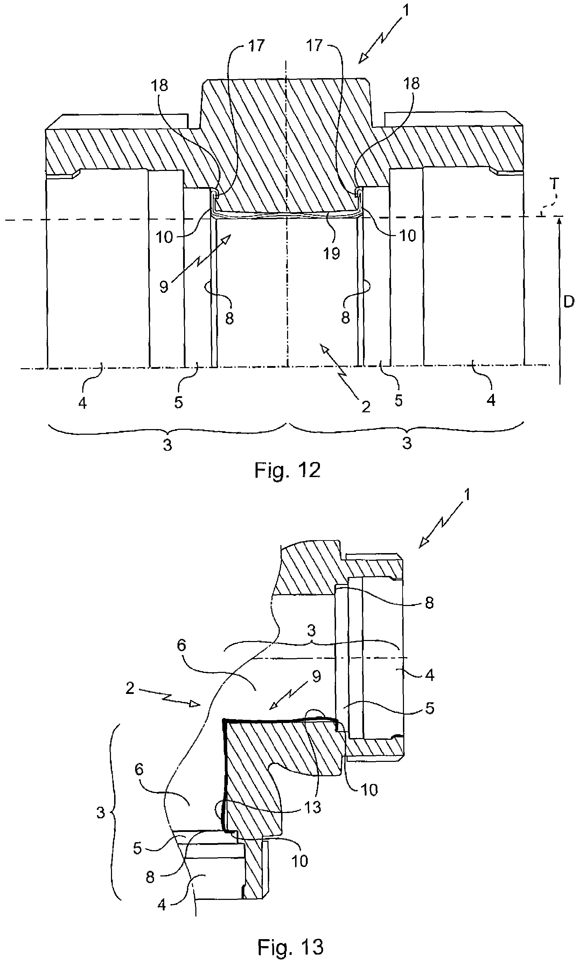

La figure 12 représente un dispositif de raccordement selon une première variante du premier mode de réalisation. Dans celle-ci, l'élément de conduction 9 est conforme à la quatrième variante des figures 10 et 11, et une gorge plane 18 est ménagée axialement dans au moins une, ici chaque, surface de butée 8 pour former un renfoncement recevant la dent 17. Ceci améliore le maintien en position de l'élément de conduction 9.

En outre, une rainure 19 est ménagée axialement dans les logements terminaux 6 entre les deux surfaces de butée 8 pour recevoir l'élément de conduction 9. Seules les parties bombées 13 sont en saillie radiale de la rainure 19.

La figure 13 représente un dispositif de raccordement selon une deuxième variante du premier mode de réalisation. Dans celle-ci, le corps 1, et donc le canal 2, sont coudés à 90°. L'élément de conduction 9 est lui-même coudé de telle manière que les deux parties intermédiaires bombées sont à 90° l'une par rapport à l'autre.

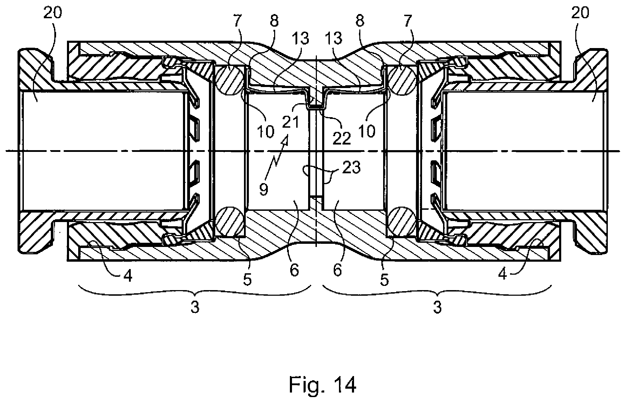

Dans le deuxième mode de réalisation représenté à la figure 14, les tronçons d'entrée 4 du canal 2 ménagé dans le corps 1 reçoivent des moyens de connexion instantanée 20 connus en eux-mêmes. Les moyens de connexion sont ici du type à rondelle d'accrochage déformable et poussoir de déconnexion.

Le corps 1 comporte une collerette centrale 21 qui s'étend en saillie dans le canal 2 et qui sépare les deux tronçons terminaux 6. La collerette centrale 21 se raccorde aux tronçons terminaux par deux épaulements de butée 23 pour s'opposer chacun à un enfoncement de l'une des extrémités de tube. L'élément de conduction électrique 9 comprend entre les parties bombées 13 un tronçon 22 en forme de cavalier chevauchant la collerette centrale 21.

Bien entendu, l'invention n'est pas limitée aux modes de réalisation décrits mais englobe toute variante entrant dans le champ de l'invention telle que définie par les revendications.

En particulier, les moyens de retenue des tubes peuvent être différents de ceux décrits et peuvent notamment comprendre par exemple une pince, une olive et un écrou ou autre.

L'élément de conduction électrique 9 peut avoir une structure différente de celle décrite et être formé par exemple par un fil métallique. L'élément de conduction électrique 9 peut être en tout matériau électriquement conducteur et par exemple en cuivre.

Les chambrages dans lesquels sont engagées les extrémités de l'élément de conduction électrique 9 peuvent ne pas recevoir d'élément d'étanchéité.

L'élément de conduction peut comprendre une seule partie intermédiaire bombée.

Le corps du dispositif de raccordement peut avoir une forme différente de celles décrites et par exemple une forme en T.

## Revendications

1. Dispositif de raccordement de tubes électriquement conducteurs, le dispositif comportant deux tubes électriquement conducteurs et un corps (1) délimitant un canal (2) ayant deux tronçons d'extrémité (3) agencés pour recevoir chacun une extrémité d'un des tubes, chaque tronçon d'extrémité étant pourvu d'un chambrage annulaire (5) pourvu d'un flanc (8) orienté vers une entrée dudit tronçon d'extrémité (3), le dispositif comprenant au moins un élément de conduction (9) électrique élastiquement déformable ayant des extrémités en appui contre lesdits flancs (8) des chambrages annulaires (5) et au moins une partie intermédiaire (13) s'étendant dans le canal (2),
**caractérisé en ce que** la partie intermédiaire (13) est bombée et fait saillie dans le canal (2) pour prendre appui contre une surface extérieure d'une extrémité de chacun des deux tubes et assurer une continuité électrique entre les deux extrémités de tube.

2. Dispositif selon la revendication 1, dans lequel l'élément de conduction (9) comprend deux parties bombées (13) agencées pour prendre chacune appui contre la surface extérieure de l'une des extrémités de conduite.

3. Dispositif selon la revendication 2, dans lequel le corps (1) comporte une collerette (21) centrale délimitant deux épaulements de butée (23) pour s'opposer chacun à un enfoncement de l'une des extrémités de tube et l'élément de conduction électrique (9) comprend entre les parties bombées un tronçon (22) en forme de cavalier chevauchant la collerette (21).

4. Dispositif selon la revendication 1, dans lequel une rainure (19) est ménagée axialement dans une paroi du corps (1) définissant le canal (2) entre les deux surfaces de butée, l'élément de conduction (9) s'étendant dans la rainure de manière que seule la partie bombée soit en saillie radiale de la rainure (19).

5. Dispositif selon la revendication 1, dans lequel l'élément de conduction (9) est un feuillard conformé en agrafe.

6. Dispositif selon la revendication 5, dans lequel au moins une des extrémités (10) du feuillard est agencée pour mordre la surface de butée (8).

7. Dispositif selon la revendication 6, dans lequel ladite extrémité du feuillard comprend au moins une dent (15, 16) formée par déformation plastique.

8. Dispositif selon la revendication 7, dans lequel ladite dent (15) est également formée par découpe.

9. Dispositif selon la revendication 7, dans lequel ladite dent (16) est formée par un crevé.

10. Dispositif selon la revendication 1, dans lequel l'élément de conduction (9) est un fil métallique.

11. Dispositif selon la revendication 1, dans lequel au moins un des flancs (8) comprend un renfoncement dans lequel l'extrémité correspondante de l'élément de conduction (9) est engagée.

12. Dispositif selon la revendication 1, dans lequel chaque chambrage annulaire (5) reçoit un élément d'étanchéité (7) pour enserrer l'extrémité de tube et le flanc (8) forme une surface de butée pour s'opposer à un enfoncement de l'élément d'étanchéité (7) dans le corps (1) .

## Patentansprüche

1. Vorrichtung zum Verbinden von elektrisch leitenden Rohren, wobei die Vorrichtung zwei elektrisch leitende Rohre und einen Körper (1) umfasst, der einen Kanal (2) begrenzt, der zwei Endabschnitte (3) hat, die ausgebildet sind, um jeweils ein Ende eines der Rohre aufzunehmen, wobei jeder Endabschnitt mit einer ringförmigen Einsenkung (5) versehen ist, die mit einer Flanke (8) versehen ist, die in Richtung eines Einlasses des Endabschnittes (3) gerichtet ist, wobei die Vorrichtung mindestens ein elastisch verformbares elektrisches Leitungselement (9) umfasst, das Enden in Anlage an den genannten Flanken (8) der ringförmigen Einsenkungen (5) und mindestens einen Zwischenteil (13) hat, der sich in dem Kanal (2) erstreckt, **dadurch gekennzeichnet, dass** der Zwischenteil (13) gewölbt ist und in den Kanal (2) vorsteht, um an einer Außenfläche eines Endes jedes der beiden Rohre zur Anlage zu kommen und eine elektrische Kontinuität zwischen den beiden Rohrenden zu gewährleisten.

2. Vorrichtung nach Anspruch 1, bei der das Leitungselement (9) zwei gewölbte Teile (13) umfasst, die ausgebildet sind, um jeweils an der Außenfläche eines der Leitungsenden zur Anlage zu kommen.

3. Vorrichtung nach Anspruch 2, bei der der Körper (1) einen zentralen Kragen (21) umfasst, der zwei Anschlagschultern (23) begrenzt, um sich jeweils einem Eindrücken eines der Rohrenden zu widersetzen, und das elektrische Leitungselement (9) zwischen den gewölbten Teilen einen Abschnitt (22) in Form einer Krampe umfasst, die den Kragen (21) übergreift.

4. Vorrichtung nach Anspruch 1, bei der eine Nut (19) axial in einer Wand des Körpers (1) ausgebildet ist, die den Kanal (2) zwischen den beiden Anschlagflächen definiert, wobei sich das Leitungselement (9) in der Nut derart erstreckt, dass nur der gewölbte Teil radial aus der Nut (19) vorsteht.

5. Vorrichtung nach Anspruch 1, bei der das Leitungselement (9) ein als Klammer geformtes Band ist.

6. Vorrichtung nach Anspruch 5, bei der mindestens eines der Enden (10) des Bandes so ausgebildet ist, dass es in die Anschlagfläche (8) greift.

7. Vorrichtung nach Anspruch 6, bei der das genannte Ende des Bandes mindestens einen Zahn (15, 16) umfasst, der durch plastische Verformung gebildet ist.

8. Vorrichtung nach Anspruch 7, bei der der genannte Zahn (15) auch durch Schneiden gebildet ist.

9. Vorrichtung nach Anspruch 7, bei der der genannte Zahn (16) durch Ausstanzen gebildet ist.

10. Vorrichtung nach Anspruch 1, bei der das Leitungselement (9) ein Metalldraht ist.

11. Vorrichtung nach Anspruch 1, bei der mindestens eine der Flanken (8) eine Vertiefung umfasst, in der das entsprechende Ende des Leitungselements (9) eingefügt ist.

12. Vorrichtung nach Anspruch 1, bei der jede ringförmige Einsenkung (5) ein Dichtungselement (7) aufnimmt, um das Rohrende einzuspannen, und die Flanke (8) eine Anschlagfläche bildet, um sich einem Eindrücken des Dichtungselements (7) in den Körper (1) zu widersetzen.

## Claims

1. A connection device for connecting together electrically-conductive tubes and a body (1) defining a channel (2) having two end segments (3), each arranged to receive an end of one of the tubes, each end segment being provided with an annular recess (5) provided with a flank (8) facing towards an inlet of said end segment (3), the device including at least one elastically deformable electrical conductor element (9) having ends bearing against said flanks (8) of the annular recesses (5) and at least one intermediate portion (13) extending into the channel (2), **characterized in that** the intermediate portion (13) is curved and projects into the channel (2) in order to bear against the outside surfaces of the tube ends and to provide electrical continuity between the two tube ends.

2. A device according to claim 1, wherein the conductor element (9) has two curved portions (13), each arranged to bear against the outside surface of one of the pipe ends.

3. A device according to claim 3, wherein the body (1) has a central collar (21) defining two abutment shoulders (23), each for opposing one of the tube ends being pushed in further, and the electrical conductor element (9) further includes a bridge-shaped segment (22) between the curved portions passing over the collar (21).

4. A device according to claim 1, wherein a slot (19) is arranged axially in a wall of the body (1) defining the channel (2) between the two abutment surfaces, the conductor element (9) extending in the slot so that only the curved portion projects radially from the slot (19).

5. A device according to claim 1, wherein the conductor element (9) is a foil having the shape of a staple.

6. A device according to claim 5, wherein at least one of the ends (10) of the foil is arranged to bite into the abutment surface (8).

7. A device according to claim 6, wherein said end of the foil has at least one tooth (15, 16) formed by plastic deformation.

8. A device according to claim 1, wherein said tooth (15) is also formed by cutting.

9. A device according to claim 8, wherein said tooth (16) is formed as a plunged boss.

10. A device according to claim 1, wherein the conductor element (9) is a wire.

11. A device according to claim 1, wherein at least one of the flanks (8) includes a setback in which the corresponding end of the conductor element (9) is engaged.

12. A device according to claim 1, wherein each annular recess (5) receives a sealing element (7) for clamping onto the tube end and the flank (8) forms an abutment surface for opposing the sealing element (7) being pushed further into the body (1).
